# EUROPÄISCHE PATENTSCHRIFT

(11) **EP 0 679 473 B1**
(45) Veröffentlichungstag und Bekanntmachung des Hinweises auf die Patenterteilung: **02.09.1998**
(21) Anmeldenummer: 95105850.2
(22) Anmeldetag: 19.04.1995
(51) Int. Cl.: B24B 9/14, B24B 47/22, B24B 49/12, B23Q 15/22, G05B 19/402

(54) **Anlage zum Schleifen wenigstens des Umfangsrandes von Brillengläsern**
Spectacles glass bevelling unit
Unité de meulage des bords de verres de lunettes

(30) Priorität: 28.04.1994 DE 4414784
(43) Veröffentlichungstag der Anmeldung: 02.11.1995
(73) Patentinhaber: Wernicke & Co. GmbH, 40231 Düsseldorf (DE)
(72) Erfinder: Gottschald, Lutz, Dr.-Ing, D-40670 Meerbusch (DE)
(74) Vertreter: Rehders, Jochen, Dipl.-Ing.

(56) Entgegenhaltungen:
- EP-A- 0 226 349
- DE-A- 4 030 185
- DE-A- 4 107 299
- DE-A- 4 127 094
- US-A- 4 794 736

## Beschreibung

Die Erfindung betrifft eine Anlage zum Schleifen wenigstens des Umfangsrandes von Brillengläsern, gemäß Oberbegriff des Patentanspruchs 1.

Eine derartige Anlage ist in der deutschen Offenlegungsschrift 41 27 094 derselben Anmelderin beschrieben. Bei dieser Anlage ist wenigstens eine mit der Steuereinrichtung verbundene Eingabevorrichtung für die optischen Werte des Brillenglases und/oder für die Dezentrationswerte der vorgegebenen Umrißgestalt und/oder die Achsenlage und/oder die Lage des Nahteils mit Bezug auf die optische Achse sowie wenigstens ein mit der Steuereinrichtung verbundenes Handhabungsgerät zum Aufnehmen und Positionieren des Brillenglasrohlings entsprechend den in die Eingabevorrichtung eingegebenen Werten und zum entsprechenden positionsgenauen Einsetzen des Brillenglasrohlings in die Halterung vorhanden.

Das Handhabungsgerät ergreift einen Brillenglasrohling am Rand und führt ihn in die geöffnete Halterung der Brillenglasschleifmaschine. Dabei wird das Handhabungsgerät so gesteuert, daß der Brillenglasrohling mit Bezug auf die Drehachse der Halterung entsprechend den eingegebenen Dezentrationswerten positioniert wird. Wenn die Halterung danach den Brillenglasrohling einklemmt und das Handhabungsgerät den Brillenglasrohling freigibt, läßt sich der Schleifvorgang gemäß vorgegebenen optischen Werten und/oder gemäß einer vorgebbaren Umrißgestalt des Brillenglases unter Berücksichtigung der Dezentrationswerte durchführen. Auf ein Blocken des Brillenglasrohlings vor dem Einsetzen in die Halterung in der Brillenglasrandschleifmaschine läßt sich dabei verzichten, wenn die Halterung so gestaltet ist, daß sie den mittels des Handhabungsgeräts genau positionierten Brillenglasrohling drehfest einklemmt. Zusätzlich oder anstelle der Dezentrationswerte können durch die Eingabevorrichtung auch die Achsenlage der vorgegebenen Umrißgestalt bei Brillengläsern mit zylindrischem oder prismatischem Schliff und/oder die optischen Werte des zu schleifenden Brillenglases, nämlich bei Mehrschärfengläsern die Lage von Nahteilen berücksichtigt werden.

Um den Brillenglasrohling automatisch ausrichten zu können, kann bei der bekannten Vorrichtung ein im Arbeitsbereich des Handhabungsgeräts angeordnetes Scheitelbrechwertmeßgeräts vorhanden sein, das einen Sensor und eine Datenverbindung zur Steuereinrichtung aufweist, zum Positionieren des vom Handhabungsgerät gehaltenen Brillenglasrohlings in den optischen Mittelpunkt und Registrieren der Daten des optischen Mittelpunkts für das anschließende positionsgenaue Einsetzen des Brillenglasrohlings in die Halterung.

Des weiteren ist eine Möglichkeit zum Steuern des Handhabungsgeräts durch eine maschinenlesbare Markierung der optischen Werte auf dem Brillenglasrohling beschrieben. Der vom Handhabungsgerät ergriffene Brillenglasrohling läßt sich dann in dem Bereich eines Sensors führen, wo die optischen Werte abgelesen werden. Mittels einer Datenverbindung zur Steuereinrichtung läßt sich das positionsgenaue Einsetzen des Brillenglasrohlings in die Halterungen in Abhängigkeit von den vom Sensor erfaßten optischen Werten und von eingegebenen Dezentrationswerten und/oder der Achsenlage steuern.

Schließlich ist noch erwähnt, daß sich eine größere Anzahl unterschiedlicher Brillenglasrohlinge in einem für das Handhabungsgerät zugänglichen Aufbewahrungsbehälter anordnen läßt, wobei für jeden der Brillenglasrohlinge eine maschinenlesbare Markierung als Adresse am Aufbewahrungsbehälter angeordnet sein kann, die von einem Sensor am Handhabungsgerät gelesen wird und über eine Datenverbindung zur Steuereinrichtung die Entnahme eines Brillenglasrohlings aus dem Aufbewahrungsbehälter entsprechend den eingegebenen optischen Werten steuern.

Der Erfindung liegt die Aufgabe zugrunde, in einer Anlage zum Schleifen wenigstens des Umfangsrandes von Brillengläsern ein Erkennungssystem für Markierungen an Brillengläsern vorzusehen, das auf die gebräuchlichen Markierungen durch Punkte, Kreuze, Kerben am Rand des Brillenglasrohlings oder die Lage eines vorhandenen Nahteils anspricht.

Ausgehend von dieser Aufgabenstellung wird bei einer Anlage der eingangs erwähnten Art vorgeschlagen, daß sie eine im Arbeitsbereich des Handhabungsgeräts angeordnete opto-elektronische Erkennungseinrichtung für gebräuchliche Markierungen durch Punkte, Kreuze, Kerben am Rand des Brillenglasrohlings oder die Lage eines vorhandenen Nahteils und eine Steuereinrichtung an der Erkennungseinrichtung in Wirkverbindung mit einer Steuereinrichtung für das Handhabungsgerät zum positionsgenauen Einsetzen des Brillenglasrohlings in die Halterung aufweist.

Diese opto-elektronische Erkennungseinrichtung kann vorzugsweise eine Halterung für einen Brillenglasrohling, eine Beleuchtungseinrichtung und eine CCD-Kammera mit einem elektronischen Bildverarbeitungs- und Auswertesystem in Wirkverbindung mit der Steuereinrichtung für das Handhabungsgerät aufweisen.

Ein durch Punkte, Kreuze, Kerben am Umfangsrand und/oder mindestens einen eindeutig abgegrenzten Nahteil markierter Brillenglasrohling wird mittels des Handhabungsgeräts oder von Hand in die Halterung der opto-elektronischen Erkennungseinrichtung eingesetzt, woraufhin die CCD-Kamera ein Bild des Brillenglasrohlings aufnimmt, mittels des elektronischen Bildverarbeitungs- und Auswertesystems dahingehend auswertet, daß Signale bezüglich der Achsenlage eines zylindrischen oder prismatischen Schliffs und/oder die Lage eines Nahteils ermittelt und in die Steuereinrichtung für das Handhabungsgerät eingegeben werden. Das Handhabungsgerät ergreift daraufhin den Brillenglasrohling lagegenau hinsichtlich der genannten optischen und/oder der Dezentrationswerte und setzt den Brillenglasrohling entsprechend diesen Werten in die Halterung einer Brillenglasrandschleifmaschine ein, die daraufhin automatisch den Formschliff des Brillenglasrohlings CNC-gesteuert durchführt.

Vorzugsweise kann die opto-elektronische Erkennungseinrichtung aus einem Gehäuse mit einer Öffnung, einer Dreipunkt-Auflage für einen Brillenglasrohling vor der Öffnung, einer unter der Öffnung im Gehäuse angeordneten CCD-Kamera, einer Halterung für einen Schwenkarm und eine Schräglichtbeleuchtung, einem am Schwenkarm verschiebbar angeordneten, weichelastischem Kopf zum Festhalten eines Brillenglasrohlings auf der Dreipunkt-Auflage sowie dem elektronischen Bildverarbeitungs- und Auswertesystem bestehen.

Bei dieser Anordnung liegt der Brillenglasrohling beispielsweisewaagerecht auf der Dreipunkt-Auflage, die unterhalb angeordnete CCD-Kamera nimmt ein Bild des Brillenglasrohlings mit den Markierungen auf, wonach das Handhabungsgerät entsprechend den aufgenommenen Daten den Brillenglasrohling aufnimmt, um 90° dreht und in die Halterung der Brillenglasrandschleifmaschine einsetzt.

Die Dreipunkt-Auflage und der Schwenkarm können auch so angeordnet sein, daß der Brillenglasrohling senkrecht gehalten wird und in dieser Stellung durch die CCD-Kamera ein Bild vom Brillenglasrohling mit den Markierungen aufgenommen wird. In diesem Fall muß dafür Sorge getragen werden, daß der Brillenglasrohling durch den Schwenkarm mit dem weichelastischen Kopf an der Dreipunkt-Auflage gehalten wird, bevor sich die Greifvorrichtung an dem Handhabungsgerät zurückzieht.

Auf den Schwenkarm mit dem weichelastischen Kopf läßt sich verzichten, wenn die Dreipunkt-Auflage Sauger aufweist, die den Brillenglasrohling halten.

Das Handhabungsgerät kann einen zwischen der Halterung und der opto-elektronischen Erkennungseinrichtung bewegbaren Kopfteil mit auf einem Ringabschnitt angeordneten Saugern und/oder einen einzelnen Sauger am Kopfteil aufweisen. Mittels der an einem Ringabschnitt angeordneten Sauger läßt sich ein Brillenglasrohling im Bereich des Randes ergreifen und auf der Dreipunkt-Auflage ablegen bzw. in die Halterung der Brillenglasrandschleifmaschine einsetzen, wobei der mittlere Bereich um die optische Achse des Brillenglasrohlings herum zum Ansetzen des weichelastischen Kopfes am Schwenkarm der opto-elektronischen Erkennungseinrichtung bzw. zum Einsetzen in die Halterung in der Brillenglasrandschleifmaschine frei bleibt.

Um sicher zu sein, daß die auf einem Ringabschnitt angeordneten Sauger einen Brillenglasrohling sicher halten, können mindestens sechs Sauger parallel zueinander an dem Kopfteil angeordnet und jeweils maximal beabstandete Saugerpaare über eine gemeinsame Saugleitung und Sensoren mit einem Unterdruckbehälter oder einer Vakuumpumpe verbunden sein, wobei die Sensoren die Bewegungssteuerung des Handhabungsgeräts durch die Steuereinrichtung dann auslösen, wenn wenigstens eines der Saugerpaare an eine gemeinsame Saugleitung und einen Sensor angeschlossen an einem Brillenglasrohling anliegt.

Statt, wie erwähnt, einen Brillenglasrohling von Hand in die opto-elektronische Erkennungseinrichtung einzulegen, kann ein im Arbeitsbereich des Handhabungsgeräts angeordneter, durch ein Transportsystem herangebrachter Behälter für Brillenglasrohlinge vorhanden sein, der vorzugsweise Auflager für je einen flachliegenden linken und rechten Brillenglasrohling aufweist. Diese Brillenglasrohlinge werden an anderer Stelle der Anlage in einen Behälter gelegt und durch das Transportsystem in den Arbeitsbereich des Handhabungsgeräts gebracht, wo das Handhabungsgerät jeweils einen Brillenglasrohling aus dem Behälter entnimmt, in die opto-elektronische Erkennungseinrichtung anlegt und von dort positionsgenau in die Halterung der Brillenglasrandschleifmaschine einsetzt, sowie nach Beendigung der Bearbeitung in dem Behälter zurücklegt.

Die Erfindung wird nachstehend anhand eines in der Zeichnung dargestellten Ausführungsbeispiels des näheren erläutert. In der Zeichnung zeigen:
- Fig. 1: eine schematische, perspektivische Ansicht einer erfindungsgemäßen Anlage,
- Fig. 2: eine schematische Schnittansicht einer opto-elektronischen Erkennungseinrichtung und
- Fig. 3 bis 5: Brillenglasrohlinge mit verschiedenen Markierungen.

Eine erfindungsgemäße Anlage zum Schleifen wenigstens des Umfangsrandes von Brillengläsern weist eine CNC-gesteuerte Brillenglasrandschleifmaschine 1, mit einer Eingabetastatur 2, einer Klappe 3 mit einem Fenster, einer hinter der Klappe 3 angeordneten Brillenglashaltewelle 4, in der ein Brillenglas 5 gehalten ist, das mittels einer Schleifscheibe 6 CNC-gesteuert seinen Formschliff erhält, auf. Eine Steuereinrichtung 7, die hier außerhalb der Brillenglasrandschleifmashine 1 dargestellt ist, ist in die Brillenglasrandschleifmaschien 1 integriert und bewirkt das Formschleifen des Brillenglases 5 entsprechend eingegebenen Daten für die Brillenglasform.

Ein Kasten 8 mit zwei Auflagern 9 für flachliegende Brillenglasrohlinge, nämlich einem linken Brillenglasrohling 10 und einem rechten Brillenglasrohling 11 läßt sich mittels einer nicht dargestellten Transportvorrichtung auf Führungsschienen 12 in den Bereich eines Handhabungsgeräts 13 bringen. Dieses Handhabungsgerät 13 ist mittels eines ortsfesten Ständers 14 verankert und weist ein am oberen Ende des Ständers 14 um senkrechte Achsen schwenkbares Armepaar 15 auf. Am freien Ende eines der schwenkbaren Arme 15 ist eine dreh- und verschiebbare Führungsstange 16 in einem mit einem entsprechenden Antrieb versehenen Kopfteil 21 angeordnet. Am unteren Ende der Führungsstange 16 befindet sich ein weiterer Kopfteil 17, der als Träger für einen senkrechten, bezüglich des Kopfteils 17 feststehenden Sauger 18 und für sechs um eine waagerechte Achse drehbare, an einem Ringsegment halbmondförmig angeordnete Sauger 19 dient. Von jedem der Sauger 19 führt eine Saugleitung 20 in den Kopfteil 17 und von dort über nicht dargestellte Sensoren zu einem Unterdruckbehälter oder zu einer Vakuumpumpe. Eine entsprechende Saugleitung ist auch für den Sauger 18 vorhanden.

Mittels einer Steuereinrichtung 22 läßt sich der Kopfteil 17 in den Bereich der Brillenglasrandschleifmaschine 1, des Kastens 8 und eines opto-elektronischen Erkennungssystems 23 für Brillengläser bringen. Das opto-elektronische Erkennungssystem 23 weist ein Gehäuse 30 mit einer nach oben gerichteten Öffnung 31 auf. Die Öffnung ist von einer Abschirmung 26 umgeben, aus der drei Stifte 24 einer Dreipunkt-Auflage für einen Brillenglasrohling 25 herausragen.

An einer Seite des Gehäuses 30 ist ein aufragender Träger 32 angeordnet, an dem ein Schwenkarm 33 gelagert ist. Dieser Schwenkarm 33 weist an seinem freien Ende eine axial verschiebbare Führungsstange 34 mit einem weichelastischen Kopf 35 an ihrem freien Ende auf. Dieser weichelastische Kopf 35 läßt sich durch Schwenken des Schwenkarms 33 bis oberhalb des Brillenglasrohlings 25 verschwenken. Durch Herabsenken der Führungsstange 34 kommt der weichelastische Kopf 35 zur Anlage auf den Brillenglasrohling 25 und hält diesen auf der Dreipunkt-Auflage 24 fest.

Am Träger 32 ist des weiteren eine Beleuchtung 37 befestigt, die für eine Schräglichtbeleuchtung des Brillenglasrohlings 25 sorgt.

In dem Gehäuse 30 unterhalb der Öffnung 31 ist eine CCD-Kamera angeordnet, die ein elektronisches Bildverarbeitungs- und Auswertesystem in einer Steuereinrichtung 36 aufweist und mit der Steuereinrichtung 22 des Handhabungsgeräts 13 verbunden ist.

Die Arbeitsweise der Anlage ist folgende:

Ein linker und ein rechter Brillenglasrohling 10, 11, die außerhalb der Anlage von Hand auf die Auflager 9 im Kasten 8 gelegt wurden, werden von dem Handhabungsgerät 13 mittels des Saugers 18 nacheinander aufgenommen, nachdem der Kasten 8 mittels einer nicht dargestellten Transportvorrichtung in den Arbeitsbereich des Handhabungsgeräts 13 gelangt ist.

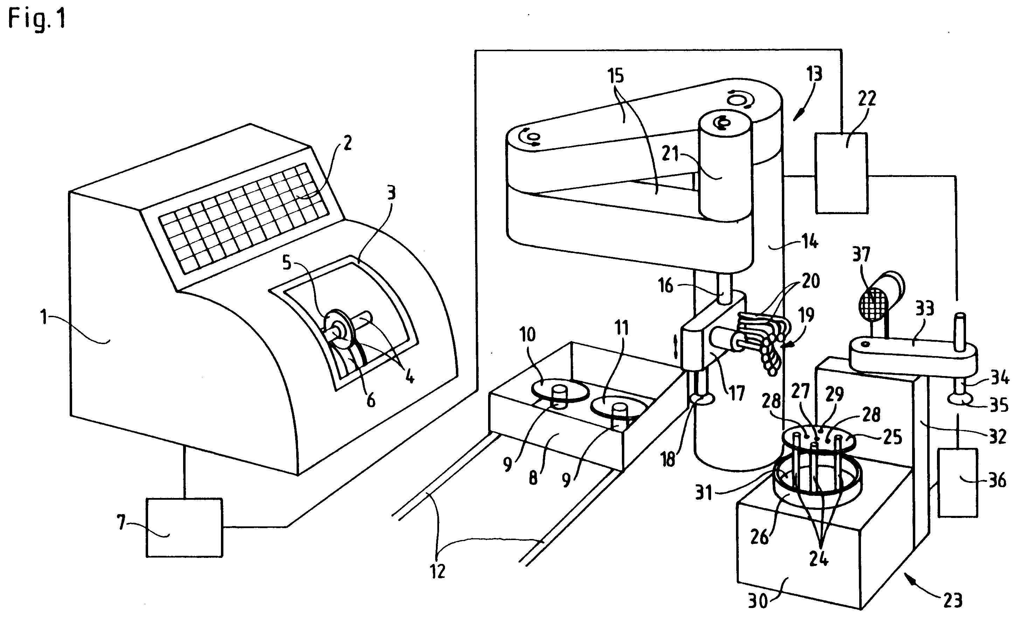

Der Einfachheit halber ist in Fig. 1 ein Brillenglasrohling 25 auf die Dreipunkt-Auflage 24 der opto-elektronischen Erkennungseinrichtung 23 abgelegt dargestellt. Dieser Brillenglasrohling weist in üblicher Weise einen Markierungspunkt 27 für den optischen Mittelpunkt des Brillenglasrohlings 25 sowie zwei dazu gleichbeabstandete, fluchtende Punkte 28 auf.

Ein weiterer dazu quer verschobener Punkt 29 ergibt eine Lagedefinition des Brillenglases, die erforderlich ist, wenn das Brillenglas einen zylindrischen oder prismatischen Schliff und/oder einen Nahteil aufweist, da der Brillenglasrohling 25 hinsichtlich der Achsenlage eines zylindrischen oder prismatischen Schliffs bzw. der Lage eines Nahteils positioniert in die Brillenglashaltewelle 4 der Brillenglasrandschleifmaschine 1 eingesetzt werden soll.

Diese Vierpunkte-Markierung wird üblicherweise vom Hersteller des Brillenglasrohlings angebracht. Ggf. läßt sich diese Vierpunkte-Markierung 27, 28, 29 außerhalb der Anlage in einem geeigneten Gerät, z. B. einem Scheitelbrechwertmesser anbringen.

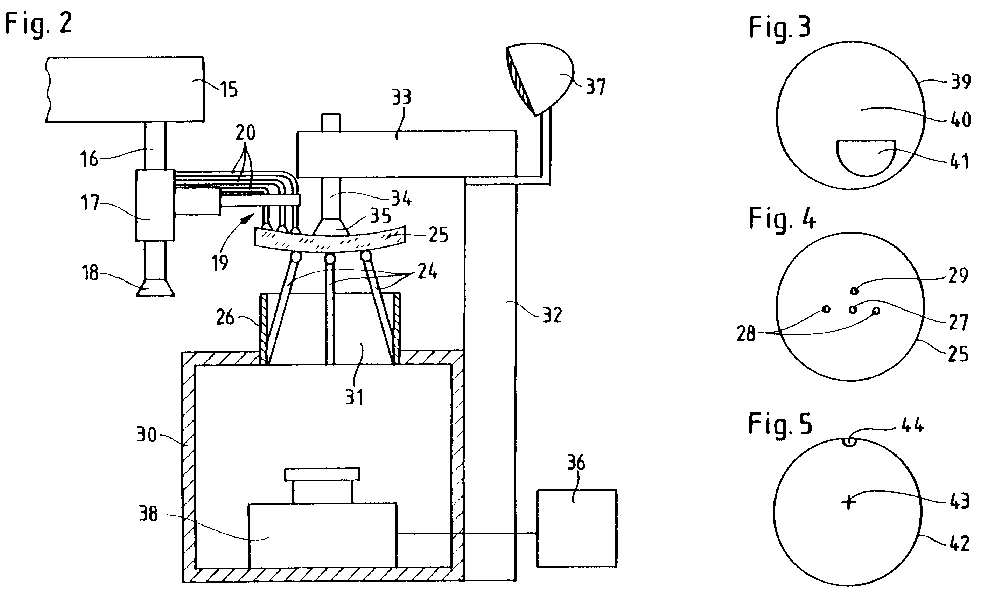

Durch die Schräglichtbeleuchtung mittels der Beleuchtung 37 wird die Vierpunkte-Markierung 27, 28, 29 für die CCD-Kamera 38 im Gehäuse 30 gut erkennbar. Das mit der CCD-Kamera 38 in Verbindung stehende Bildverarbeitungs- und Auswertesystem erzeugt in der Steuereinrichtung 36 Signale, die zur Steuereinrichtung 22 gelangen und dort einem Befehl zur Aufnahme des Brillenglasrohlings 25 auslösen. Zu diesem Zweck wird zunächst der Schwenkarm 33 mit der Führungsstange 34 und dem weichelastischen Kopf 35 über den Brillenglasrohling 25 geschwenkt und abgesenkt, so daß der Brillenglasrohling 25 fest auf der Dreipunkt-Auflage 24 aufliegt. Nunmehr werden die Sauger 19, wie in Fig. 2 dargestellt, um 90° gedreht, auf einen Randbereich des Brillenglasrohlings 25 abgesenkt und halten den Brillenglasrohling 25 fest.

Mittels des Bildverarbeitungs- und Auswertesystems 36 ist eine Information an die Steuerung 22 des Handhabungsgeräts 13 gelangt, aus der sich die Lage der Sauger 19 mit Bezug auf die Markierungspunkte 27, 28, 29 ergibt, so daß das Handhabungsgerät 13 in der Lage ist, den Brillenglasrohling 25 positionsgenau in die Haltewelle 4 der Brillenglasrandschleifmaschine 1 einzusetzen.

Bevor diese Bewegung erfolgen kann, muß zunächst der Schwenkarm 33 mit der Führungsstange und dem weichelastischem Kopf 35 in die in Fig. 1 dargestellte Stellung zurückgeschwenkt und über in den Saugleitungen 20 angeordnete Sensoren geprüft werden, ob mindestens zwei Sauger den Brillenglasrohling 25 sicher halten. Da der Brillenglasrohling 25 in der Regel eine kreisrunde Gestalt hat, ist dies bei der Aufnahme eines Brillenglasrohlings von der opto-elektronischen Erkennungseinrichtung 23 stets der Fall, jedoch ist dies bei dem Herausnehmen eines formgeschliffenen Brillenglases aus der Brillenglasrandschleifmaschine 1 nicht immer der Fall, insbesondere dann nicht, wenn die verhältnismäßig schmalen Brillengläser einer Lesebrille geschliffen werden. Um in diesem Fall eine sichere Aufnahme eines Brillenglases zu gewährleisten, sind die Sauger 19 paarweise mit der gleichen Saugleitung 20 verbunden, wobei jeweils zwei andere Sauger zwischen paarweise verbundenen Saugern 19 zu liegen kommen und somit ein maximaler Abstand zwischen jeweils paarweise verbundenen Saugern 19 gewährleistet ist.

Während ein Brillenglasrohling 25 durch die CCD-Kamera 38 aufgenommen wird, kann das Handhabungsgerät 13 ein bereits fertig formgeschliffenes Brillenglas 5 aus der Brillenglasrandschleifmaschine 1 entnehmen und in einen Kasten 8 zurücklegen.

Des weiteren können mehrere Brillenglasrandschleifmaschinen oder auch Maschinen zum Schleifen der optischen Oberflächen im Arbeitsbereich eines Handhabungsgeräts 13 angeordnet sein.

Im dargestellten Ausführungsbeispiel dient der Sauger 18 am Kopfteil 17 dazu, einen Brillenglasrohling aus dem Kasten 8 zu entnehmen und auf die Dreipunkt-Auflage 24 aufzusetzen, während die an dem Ringsegment angeordneten Sauger 19 ein Brillenglasrohling von oben oder von unten auf dem Dreipunkt-Auflager 24 liegend ergreifen und in die Brillenglashaltewelle 4 einsetzen, wodurch gewährleistet ist, daS keine Behinderung durch die Führungsstange 34 mit dem weichelastischem Kopf 35 oder durch die Brillenglashaltewelle 4 eintreten kann. Wird indessen dafür gesorgt, daß ein Brillenglasrohling 25 grundsätzlich erst aufgenommen werden kann, wenn der Schwenkarm 33 aus dem Bereich des Brillenglasrohlings 25 weggeschwenkt ist oder wenn die Brillenglashaltewelle 4 so weit auseinanderfahrbar ist, daß sich ein Brillenglasrohling auch mittels des Saugers 18 einsetzen läßt und zunächst einseitig an der Brillenglashaltewelle gehalten wird, ist es möglich, nur mit einem Sauger 18 am Kopfteil 17 auszukommen, wodurch der Aufbau des Handhabungsgeräts 13 vereinfacht wird.

In Fig. 3 ist ein Brillenglasrohling 39 mit einem Nahteil 41 dargestellt. Wird angenommen, daß der nicht eigens markierte optische Mittelpunkt 40 mit dem geometrischen Mittelpunkt des Brillenglasrohlings 39 übereinstimmt, ist die CCD-Kamera 38 in der Lage, den Nahteil 41 zu erkennen und die Anordnung mit Bezug auf den optischen/geometrischen Mittelpunkt des Brillenglasrohlings 39 zu bestimmen. In diesem Fall dient der Nahteil 41 als Markierung des Brillenglasrohlings 39, die von der opto-elektronischen Erkennungseinrichtung 23 erkannt und in Signale für das Handhabungsgerät 13 zum positionsgenauen Einlegen des Brillenglasrohlings in die Brillenglasrandschleifmaschine umgewandelt wird. Die Vierpunkte-Markierung 27, 28, 29 des in Fig. 4 dargestellten Brillenglasrohlings 25 stimmt mit der in Fig. 1 dargestellten überein, so daß nähere Erläuterungen nicht erforderlich sind.

Weist ein Brillenglasrohling 42, wie in Fig. 5 dargestellt, eine Markierung des optischen Mittelpunkts in Form eines Kreuzes 43 sowie eine Kerbe 44 auf, die bezüglich eines Nahteils oder der Achse eines prismatischen oder zylindrischen Schliffs positioniert ist, läßt sich die in Fig. 5 dargestellte Markierung ebenfalls zum Erfassen durch die opto-elektronischen Erkennungseinrichtung 23 verwenden. Insbesondere Gleitsichtgläser weisen häufig, die in Fig. 5 dargestellten, Markierungen auf.

Die beschriebene opto-elektronische Erkennungseinrichtung weist ein elektronisches Bildverarbeitungs- und Auswertesystem auf, das so genaue Daten für die Steuerung des Handhabungsgeräts 13 liefert, daß sich Brillenglasrohlinge in der CNC-gesteuerten Brillenglasrandschleifmaschine 1 äußerst genau schleifen lassen und sich ohne Nacharbeit in dasjenige Brillengestell einsetzenlassen, nach dessen Daten das Brillenglas formgeschliffen wurde. Die für den jeweiligen Brillenträger vom Optiker zu ermittelnden Dezentrationswerte des optischen Mittelpunkts der Brillengläser mit Bezug auf den geometrischen Mittelpunkt der Brillenglasöffnungen im Brillengestell lassen sich entweder von der CNC-Steuerung der Brillenglasrandschleifmaschine 1 rechnerisch berücksichtigen, oder das Handhabungsgerät 13 setzt einen Brillenglasrohling in die Brillenglasrandschleifmaschine 1 nicht nur winkelgenau bezüglich der Lage der Achse eines zylindrischen oder prismatischen Schliffs bzw. der Lage eines Nahteils, sondern auch noch um die Dezentrationswerte versetzt ein, so daß ein Umrechnen der Daten der Brillenglasform unter Berücksichtigung der Dezentrationswerte nicht erforderlich ist.

## Patentansprüche

1. Anlage zum Schleifen wenigstens des Umfangsrandes von Brillengläsern mit
- wenigstens einer Schleifscheibe (6),
- wenigstens einer drehbaren Halterung (4) für einen Brillenglasrohling (5, 10, 11, 25, 39, 42),
- wenigstens einer Einrichtung zum CNC-gesteuerten Schleifen des Rohlings (5, 10, 11, 25, 39, 42) gemäß einer vorgebbaren Umrißgestalt des Brillenglases,
- wenigstens einer mit der Steuereinrichtung verbundenen Eingabevorrichtung (2) für die optischen Werte des Brillenglases wie die Achsenlage eines zylindrischen oder prismatischen Schliffs und/oder die Lage eines Nahteils und/oder die Dezentrationswerte der vorgegebenen Umrißgestalt mit Bezug auf die optische Achse des Brillenglasrohlings (5, 10, 11, 25, 39, 42),
- wenigstens einem Handhabungsgerät (13) zum Aufnehmen und Positionieren des Brillenglasrohlings (5, 10, 11, 25, 39, 42) entsprechend den in die Eingabevorrichtung (2) eingegebenen Werten,
gekennzeichnet durch
- eine im Arbeitsbereich des Handhabungsgeräts (13) angeordnete opto-elektronische Erkennungseinrichtung (23) für gebräuchliche Markierungen (27 28, 29; 39, 41; 43, 44) durch Punkte, Kreuze, Kerben am Rand des Brillenglasrohlings (5, 10, 11, 25, 39, 42) oder die Lage eines vorhandenen Nahteils und
- eine Steuereinrichtung (36) an der Erkennungseinrichtung (23) in Wirkverbindung mit einer Steuereinrichtung (22) für das Handhabungsgerät (13) zum positionsgenauen Einsetzen des Brillenglasrohlings (5, 10, 11, 25, 39, 42) in die Halterung (4).

2. Anlage nach Anspruch 1, **dadurch gekennzeichnet,** daß die opto-elektronische Erkennungseinrichtung (23) eine Halterung (24; 33, 34, 35) für einen Brillenglasrohling (5, 10, 11, 25, 39, 42), eine Beleuchtungseinrichtung (37) und eine CCD-Kamera (38) mit einem elektronischen Bildverarbeitungs- und Auswertesystem (36) in Wirkverbindung mit der Steuereinrichtung (22) für das Handhabungsgerät (13) aufweist.

3. Anlage nach Anspruch 2, **dadurch gekennzeichnet,** daß die opto-elektronische Erkennungseinrichtung (23) aus einem Gehäuse (30) mit einer Öffnung (31), einer Dreipunkt-Auflage (24) für einen Brillenglasrohling (5, 10, 11, 25, 39, 42) vor der Öffnung (31), einer unter der Öffnung (31) im Gehäuse (30) angeordnete CCD-Kamera (38), einer Halterung (32) für einen Schwenkarm (33) sowie eine Schräglichtbeleuchtung (37), einem am Schwenkarm (33) verschiebbar angeordneten weichelastischen Kopf (35) zum Festhalten eines Brillenglasrohlings (5, 10, 11, 25, 39, 42) an der Dreipunkt-Auflage (24) sowie dem elektronischen Bildverarbeitungs- und Auswertesystem (36) besteht.

4. Anlage nach einem der Ansprüche 1 bis 3, **dadurch gekennzeichnet,** daß das Handhabungsgerät (13) einen zwischen der Halterung (4) und der opto-elektronischen Erkennungseinrichtung (23) bewegbaren Kopfteil (17) mit mehreren auf einem Ringabschnitt angeordneten Saugern (19) aufweist.

5. Anlage nach einem der Ansprüche 1 bis 4, **dadurch gekennzeichnet,** daß das Handhabungsgerät (13) einen zwischen der Halterung (4) und der opto-elektronischen Erkennungseinrichtung (23) bewegbaren Kopfteil (17) mit einem Sauger (18) aufweist.

6. Anlage nach Anspruch 4 und 5, **dadurch gekennzeichnet,** daß der Kopfteil (17) sowohl die an einem drehbaren Ringabschnitt angeordnete Sauger (19) sowie senkrecht zur Drehachse den bezüglich des Kopfteils (18) feststehenden Sauger (18) aufweist.

7. Anlage nach Anspruch 4 oder 6, **dadurch gekennzeichnet,** daß mindestens sechs Sauger (19) parallel zueinander an dem Ringeabschnitt des Kopfteils (17) angeordnet, jeweils maximal beabstandete Saugerpaare über eine gemeinsame Saugleitung (20) und Sensoren mit einem Unterdruckbehälter oder einer Vakuumpumpe verbunden sind und die Sensoren die Bewegungssteuerung des Handhabungsgeräts (13) durch die Steuereinrichtung (22) dann auslösen, wenn wenigstens eines der Saugerpaare an einem Brillenglasrohling (5, 10, 11, 25, 39, 42) anliegt.

8. Anlage nach einem oder mehreren der Ansprüche 1 bis 7, **gekennzeichnet durch** einen im Arbeitsbereich des Handhabungsgeräts (13) angeordneten Behälter (8) für Brillenglasrohlinge (5, 10, 11, 25, 39, 42).

9. Anlage nach Anspruch 8, **gekennzeichnet durch** ein Transportsystem für Behälter (8).

10. Anlage nach Anspruch 8 oder 9, **dadurch gekennzeichnet,** daß im Behälter (8) Auflager (9) für je einen flach liegende einen linken und rechten Brillenglasrohling (10, 11) angeordnet sind.

## Claims

1. Unit for bevelling at least the perimeter edge of spectacle-glasses with
- at least one bevelling-wheel (6)
- at least one rotatable mounting (4) for a spectacle-glass blank (5, 10, 11, 25, 39, 42),
- at least one arrangement for CNC bevelling of the blank in accordance with a programmable profile of the spectacle-glass (5, 10, 11, 25, 39, 42)
- at least one device (2) for inputting the optical values for the spectacle glass such as the location of the axis of a cylindrical or prismatic bevelling and/or the position of a bi-focal segment and/or the de-centring values of the programmed profile of the spectacle-glass blank (5, 10, 11, 25, 39, 42)
- at least one manipulation device (13) for receiving and positioning the spectacle-glass blank (5, 10, 11, 25, 39, 42) in accordance with the values entered in the inputting device (2), characterised by
- an opto-electronic assembly (23) located in the operating area of the manipulation device (13) for recognition of conventional markings (27, 28, 29; 39, 41; 43 44) using dots, crosses, or notches, on the edge of the spectacle-glass blank, or the position of a bi-focal segment if present, and
- a control facility (36) on the recognition device (23), working in combination with a control facility (22) for the manipulation device (13), for precise insertion of the spectacle-glass blank (5, 10, 11, 25, 39, 42) in the mounting (4).

2. Unit as claimed in Claim 1, **characterized in that** the opto-electronic recognition assembly (23) has a mounting (24; 33, 34, 35) for a spectacle-glass blank (5, 10, 11, 25, 39, 42), an illumination device (37) and a CCD camera (38) with an electronic image-processing and -evaluation system (36) working in combination with the control facility (22) for the manipulation device (13).

3. Unit as claimed in Claim 2, **characterized in that** the opto-electronic recognition assembly (23) consists of a case (30) with an opening (31), a three-point support (24) for a spectacle-glass blank (5, 10, 11, 25, 39, 42) in front of the opening (31), a CCD-camera (38) located below the opening (31) in the case (30), a mounting (32) for a swinging aim (33) and an oblique illumination (37), a soft-elastic cap (35), which may be pushed along the rotating arm (33), for holding a spectacle-glass blank (5, 10, 11, 25, 39, 42) on the three-point support (24) and of the electronic image-processing and evaluation system (36).

4. Unit as claimed in one of Claims 1 to 3, **characterized in that** the manipulation device (13) has a head (17), moveable between the mounting (4) and the opto-electronic recognition assembly (23) and with several suction-caps (19) arranged on a ring-section.

5. Unit as claimed in one of Claims 1 to 4, **characterized in that** the manipulation device (13) has a head (17), movable between the mounting (4) and the opto-electronic recognition assembly (23) and with a suction-cap (18).

6. Unit as claimed in Claim 4 and Claim 5, **characterized in that** the head (17) has both the suction-caps (19) arranged on a turning ring-section and, perpendicular to the rotation axis, the suction-cap (18) which is rigid relative to the head (18).

7. Unit as claimed in Claim 4 or 6, **characterized in that** at least six suction-caps (19) are arranged parallel to one another on the ring section of the head (17), in that furthest-apart pairs of suction-caps are each connected via a common suction duct (20) and sensors with a low-pressure container or a vacuum pump and in that the sensors trigger off control of the movement of the manipulation device (13) by the control facility (22) when at least one of the pairs of suction-caps is in contact with a spectacle-glass blank (5, 10, 11, 25, 39, 42).

8. Unit as claimed in one or more of Claims 1 to 7, **characterized by** a receptacle (8), located in the operating area of the manipulation device (13), for spectacle-glass blanks (5, 10, 11, 25, 39, 42).

9. Unit as claimed in Claim 8, **characterized by** a receptacle (8) transportation system.

10. Unit as claimed in Claim 8 or 9, **characterized in that** supports (9) are located in the receptacle (8), one each for a left and a right spectacle-glass blank (10, 11), lying flat.

## Revendications

1. Installation de meulage d'au moins le bord périphérique de verres de lunettes comportant
- au moins un disque de meulage (6),
- au moins un support (4) rotatif pour une ébauche de verres de lunettes (5, 10, 11, 25, 39, 42),
- au moins un dispositif de meulage à commande numérique de l'ébauche (5, 10, 11, 25, 39, 42) selon une forme de contour à donner à des verres de lunettes,
- au moins un dispositif de saisie (2), relié au dispositif de commande, des valeurs optiques des verres de lunettes telles que la position axiale d'une taille cylindrique ou prismatique et/ou la position d'un élément pour vision de près et/ou les valeurs de décentrage de la forme de contour données par rapport à l'axe optique de l'ébauche de verres de lunettes (5, 10, 11, 25, 39, 42),
- au moins un appareil de manipulation (13) destiné à recevoir et à positionner l'ébauche de verres de lunettes (5, 10, 11, 25, 39, 42) conformément aux valeurs introduites dans le dispositif de saisie (2)
caractérisée par
- un dispositif de détection opto-électronique (23), disposé dans la zone de travail de l'appareil de manipulation (13), pour des marquages usuels (27, 28, 29; 39, 41; 43, 44) par des points, des croix, des encoches sur les bords de l'ébauche de verres de lunettes (5, 10, 11, 25, 39, 42) ou de la position d'un élément pour vision de près existant et
- un dispositif de commande (36) sur le dispositif de détection (23) en liaison active avec un dispositif (22) pour l'appareil de manipulation (13) en vue de l'insertion dans une position précise de l'ébauche de verres de lunettes (5, 10, 11, 25, 39, 42) dans le support (4).

2. Installation selon la revendication 1, caractérisée en ce que le dispositif de détection opto-électronique (23) comporte un support (24; 33, 34, 35) pour une ébauche de verres de lunettes (5, 10, 11, 25, 39, 42), un dispositif d'éclairage (37) et une caméra CCD (38) avec un système électronique de traitement d'image et d'exploitation (36) en liaison active avec le dispositif de commande (22) pour l'appareil de manipulation (13).

3. Installation selon la revendication 2, caractérisée en ce que le dispositif de détection opto-électronique (23) est constitué d'un boîtier (30) avec une ouverture (31), d'un support à trois points (24) pour une ébauche de verres de lunettes (5, 10, 11, 25, 39, 42) devant l'ouverture (31), d'une caméra CCD (38) située au-dessous de l'ouverture (31) dans le boîtier (30), d'un support (32) pour un bras pivotant (33) ainsi qu'un éclairage à lumière oblique (37), d'une tête (35) élastique souple, montée coulissante sur le bras pivotant (33) en vue de la fixation d'une ébauche de verres de lunettes (5, 10, 11, 25, 39, 42) sur le support à trois points ainsi que du système électronique de traitement d'image et d'exploitation (36).

4. Installation selon l'une des revendications 1 à 3, caractérisée en ce que l'appareil de manipulation (13) comporte une partie de tête (17), déplaçable entre le support (4) et le dispositif de détection opto-électronique (23), avec plusieurs ventouses (19) disposées sur une portion annulaire. 5. Installation selon l'une des revendications 1 à 4,

5. caractérisée en ce que l'appareil de manipulation (13) comporte une partie de tête (17) avec une ventouse (18), déplaçable entre le support (4) et le dispositif de détection opto-électronique (23).

6. Installation selon les revendications 4 et 5, caractérisée en ce que la partie de tête (17) comporte aussi bien les ventouses (19) disposées sur une portion annulaire tournante que, perpendiculairement à l'axe de rotation, la ventouse (18) fixe par rapport à la partie de tête (17).

7. Installation selon la revendication 4 ou 6, caractérisée en ce qu'au moins six ventouses (19) sont disposées parallèlement entre elles sur la portion annulaire de la partie de tête (17), en ce que des paires de ventouses espacées au maximum sont reliées par une conduite d'aspiration (20) commune et des capteurs à un réservoir à dépression ou à une pompe à vide et en ce que les capteurs déclenchent la commande de déplacement de l'appareil de manipulation (13) par le dispositif de commande (22) lorsqu'au moins l'une des paires de ventouses s'applique contre une ébauche de verres de lunettes (5, 10, 11, 25, 39, 42).

8. Installation selon une ou plusieurs des revendications 1 à 7, caractérisée par un récipient (8) situé dans la zone de travail de l'appareil de manipulation (13), pour des ébauches de verres de lunettes (5, 10, 11, 25, 39, 42).

9. Installation selon la revendication 8, caractérisée par un système de transport de récipients (8).

10. Installation selon la revendication 8 ou 9, caractérisée en ce que dans le récipient (8) sont disposés des supports (9) prévus chacun pour une ébauche de verres de lunettes (10, 11) gauche et droite, reposant à plat.
